(19) Europäisches Patentamt
European Patent Office
Office européen des brevets

(11) **EP 3 167 319 B1**

(12) **FASCICULE DE BREVET EUROPEEN**

(45) Date de publication et mention de la délivrance du brevet:
**16.05.2018 Bulletin 2018/20**

(21) Numéro de dépôt: **15742375.7**

(22) Date de dépôt: **06.07.2015**

(51) Int Cl.:
*G02B 6/30* *(2006.01)*        *G02B 5/30* *(2006.01)*
*G02B 6/024* *(2006.01)*       *G02B 6/27* *(2006.01)*
*G02B 6/126* *(2006.01)*

(86) Numéro de dépôt international:
**PCT/FR2015/051866**

(87) Numéro de publication internationale:
**WO 2016/005692 (14.01.2016 Gazette 2016/02)**

(54) **DISPOSITIF OPTIQUE POLARISANT A GUIDE D'ONDE**

POLARISIERENDES OPTISCHES ELEMENT MIT WELLENLEITER

POLARISING OPTICAL ELEMENT WITH WAVEGUIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.07.2014 FR 1456552**

(43) Date de publication de la demande:
**17.05.2017 Bulletin 2017/20**

(73) Titulaire: **IXBLUE
78100 Saint-Germain-en-Laye (FR)**

(72) Inventeurs:
• **SIMONPIETRI, Pascal**
  **F-95240 Cormeilles en Parisis (FR)**
• **CHOUVIN, Stéphane**
  **F-92220 Bagneux (FR)**
• **MOLUCON, Cédric**
  **F-78100 Saint Germain en Laye (FR)**

(74) Mandataire: **Jacobacci Coralis Harle
32, rue de l'Arcade
75008 Paris (FR)**

(56) Documents cités:
**WO-A2-01/75195      US-A1- 2009 087 133**

# Description

## DOMAINE TECHNIQUE AUQUEL SE RAPPORTE L'INVENTION

La présente invention se rapporte à un dispositif optique polarisant.

Plus précisément, l'invention concerne un dispositif optique polarisant à guide d'onde comprenant un circuit optique intégré (COI).

## ARRIÈRE-PLAN TECHNOLOGIQUE

Il existe de nombreux circuits optiques intégrés constitués d'un substrat planaire et d'un guide d'onde optique déposé sur le substrat planaire. Les COI sont en général fabriqués par des techniques de microlithographie et/ou de diffusion thermique. Les circuits optiques intégrés peuvent être fabriqués à partir de substrats de différents matériaux tels que les semiconducteurs, le verre ou encore le niobate de lithium ($LiNbO_3$) ou le tantalate de lithium ($LiTaO_3$). Il existe différents composants optiques sur circuit optique intégré : polariseur, modulateur de phase, interféromètre de Mach-Zehnder, jonction Y, coupleurs 2x2 ou encore coupleur 3x3. Tout particulièrement, les circuits optiques intégrés par échange protonique sur niobate de lithium trouvent de nombreuses applications, par exemple dans les systèmes de mesure de rotation.

Par comparaison avec les dispositifs optiques en espace libre, les dispositifs optiques sur circuit optique intégré offrent l'avantage de permettre l'intégration de plusieurs fonctions sur un même COI, ce qui permet d'améliorer la compacité et de réduire les connexions optiques.

Cependant, les spécifications des dispositifs optiques sur circuit optique intégré ont certaines limites. Ainsi, un polariseur à guide d'onde sur circuit optique intégré a un taux d'extinction en polarisation qui est limité à environ -45 à -65 dB.

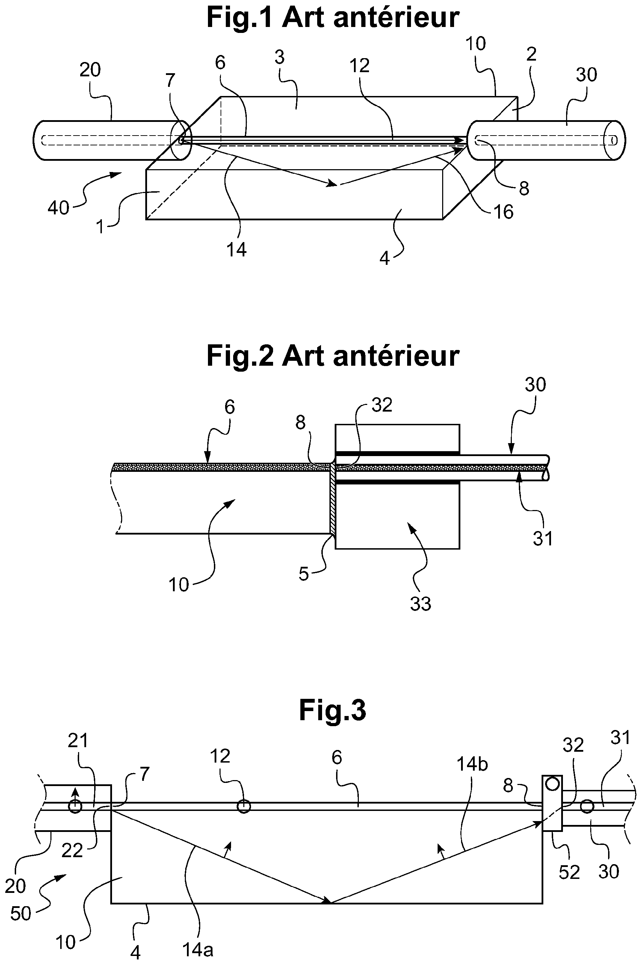

La Figure 1 représente schématiquement une vue en perspective d'un dispositif polarisant à guide d'onde selon l'art antérieur et illustre le fonctionnement de ce dispositif.

Le dispositif polarisant 40 comprend un circuit optique intégré comprenant un substrat 10 planaire et un guide d'onde polarisant 6. Par convention dans le présent exposé, le substrat 10 comprend une face d'entrée 1, une face de sortie 2, une face inférieure 4, une face supérieure 3 et deux faces latérales. La face inférieure 4 et la face supérieure 3 s'étendent entre la face d'entrée 1 et la face de sortie 2. La face inférieure 4 et la face supérieure 3 sont opposées l'une à l'autre. De préférence, la face inférieure 4 et la face supérieure 3 sont planes et parallèles. De même, les faces latérales sont planes et parallèles entre elles et s'étendent entre la face d'entrée 1 et la face de sortie 2. Le guide d'onde optique 6, par exemple rectiligne, s'étend entre une première extrémité 7 sur la face d'entrée 1 et une deuxième extrémité 8 sur la face de sortie 2. Les faces d'entrée 1 et de sortie 2 du substrat peuvent aussi être planes et polies, mais sont de préférence taillées avec un angle d'inclinaison par rapport à l'axe du guide d'onde aux extrémités 7 et 8 pour éviter les rétro-réflexions parasites. Par convention, le guide d'onde 6 est plus proche de la face supérieure 3 que de la face inférieure 4. Un tel polariseur à guide d'onde 6 sur circuit optique intégré peut aisément être relié par des sections de fibre optique 20, 30 à d'autres composants optiques tels qu'une source lumineuse ou un détecteur.

Dans le cas d'un polariseur à échange de protons sur niobate de lithium, le guide d'onde optique 6 est situé en dessous de la face supérieure 3 du substrat et s'étend dans un plan parallèle à la face supérieure 3. Le guide d'onde optique 6 forme un polariseur à guide d'onde qui ne guide qu'une seule polarisation. Le guide d'onde optique 6 peut être délimité par la face supérieure ou être enterré juste en dessous de cette face supérieure. Dans d'autres types de COI, le guide d'onde 6 peut être déposé sur la surface supérieure 3 ou encore s'étendre à l'intérieur du substrat, par exemple dans un plan parallèle à la surface supérieure 3, à mi-distance entre la face inférieure 4 et la face supérieure 3. Une fibre optique d'entrée 20 et une fibre optique de sortie 30 sont couplées optiquement à la première extrémité 7 et respectivement à la deuxième extrémité 8 du guide d'onde 6.

La fibre optique d'entrée 20 transmet un faisceau optique dans le circuit optique intégré. Une partie du faisceau optique est guidée par le guide d'onde. Le faisceau guidé 12 se propage jusqu'à l'extrémité 8 du guide d'onde 6 face à la fibre de sortie 30. Du fait d'une désadaptation de mode entre le coeur de la fibre optique 20 et le guide d'onde intégré 6, une autre partie du faisceau n'est pas couplée dans le guide d'onde et se propage librement dans le substrat 10. Un faisceau non guidé 14 se propage alors dans le substrat jusqu'à la face inférieure 4 du substrat. Une partie du faisceau non guidé 14 peut être réfléchie par réflexion interne totale sur la face inférieure 4. Une partie du faisceau réfléchi 16 peut alors être transmise jusqu'à l'extrémité du substrat face à la fibre de sortie 30. La fibre de sortie 30 peut ainsi collecter non seulement le faisceau optique guidé 12, mais aussi une partie du faisceau optique non guidé et réfléchi 16. Un faisceau d'entrée est généralement couplé à une extrémité d'un guide d'onde optique par l'intermédiaire d'une fibre optique. Toutefois, seuls certains modes, par exemple de polarisation, sont guidés par le guide d'onde, les autres modes se propageant librement dans le substrat. De plus, si le coeur de la fibre n'est pas parfaitement aligné avec le guide d'onde du circuit optique intégré, une partie du faisceau lumineux incident peut être couplée dans le substrat et se propager à l'extérieur du guide d'onde. Une partie de la lumière non guidée par le guide d'onde peut être réfléchie par réflexion interne totale sur une ou plusieurs faces du substrat. In fine, une partie de cette lumière non guidée peut être couplée à une fibre optique de sortie face à une autre extrémité du guide d'onde. La lumière non guidée peut ainsi perturber le fonctionnement d'un circuit optique intégré. Par exemple, dans le cas d'un polariseur à échange de protons sur niobate de lithium, le taux réjection en polarisation peut être affecté par le couplage de lumière transmise par le substrat de manière non guidée.

La figure 1 représente uniquement une réflexion unique sur la face inférieure 4 du substrat, à mi-distance entre la face d'entrée 1 et la face de sortie 2, c'est-à-dire au centre de la face inférieure 4. Toutefois, d'autres réflexions internes multiples sont également possibles. En effet, le substrat peut transmettre différents faisceaux non guidés se propageant par réflexion interne notamment sur la face inférieure 4, mais aussi par réflexions multiples entre la face inférieure 4 et la face supérieure 3 ou encore sur les faces latérales 5. Des faisceaux parasites non guidés se propageant par réflexion interne sur les faces du substrat peuvent parvenir à proximité de l'extrémité 8 de guide d'onde sur la face de sortie 2 du substrat.

De manière générale, les faisceaux non guidés réfléchis à l'intérieur du substrat peuvent affecter la qualité des signaux transmis dans le guide d'onde d'un circuit optique intégré. Dans le cas d'un polariseur à échange protonique sur niobate de lithium, coupé suivant un plan X et comprenant un guide d'onde intégré suivant l'axe de propagation Y, le faisceau guidé 12 est généralement un faisceau de polarisation TE et le faisceau non guidé 14 est un faisceau de polarisation TM. Du fait des réflexions internes de lumière non guidée dans le substrat, le taux de réjection en polarisation d'un polariseur à échange protonique selon le schéma de la figure 1 est en pratique limité à environ -50 dB.

Or, la qualité d'un polariseur influence les performances de certaines applications. Il est donc nécessaire d'améliorer le taux de réjection d'un polariseur à guide d'onde intégré.

Différentes solutions ont été proposées pour résoudre le problème de couplage parasite de faisceaux optiques non guidés entre une entrée de guide d'onde et une sortie de guide d'onde dans un circuit optique intégré.

Il est généralement admis que la principale contribution à la lumière parasite provient de la réflexion primaire d'un faisceau non guidé 14 en un point de réflexion primaire situé au centre de la face inférieure 4 entre une première extrémité 7 de guide d'onde sur la face d'entrée 1 et une seconde extrémité 8 de guide d'onde sur la face de sortie 2.

Afin de supprimer la réflexion primaire sur la face inférieure d'un substrat 4, il a été proposé d'usiner une rainure centrale disposée au milieu de la face inférieure 4 et s'étendant transversalement au guide d'onde optique 6. Une rainure centrale sur la face inférieure du substrat permet d'absorber ou de dévier les faisceaux se propageant dans le substrat et ainsi d'améliorer le taux de réjection d'un polariseur à échange protonique de plusieurs ordres de grandeur. Cependant, en pratique, le taux de réjection d'un polariseur à échange protonique reste limité à environ -65 dB.

L'invention vise à proposer une solution alternative ou complémentaire à la formation d'une rainure centrale absorbante sur la face inférieure d'un circuit intégré optique à guide d'onde polarisant pour augmenter le taux de réjection d'un dispositif polarisant à guide d'onde.

La figure 2 représente schématiquement une vue en coupe d'un détail du dispositif polarisant 40 de la figure 1. L'extrémité de la fibre optique 30 est reliée à un polariseur à guide d'onde 5 formé sur un substrat 10 de circuit intégré optique. La fibre optique 30 a un coeur 31 de préférence monomode. L'extrémité de la fibre optique 30 est généralement collée à une férule 32, qui permet de connecter et d'aligner l'extrémité de la fibre optique 30 sur le guide d'onde 6. Le coeur 31 de la fibre optique est aligné et centré par rapport au guide d'onde 6 formé par exemple par échange protonique sur un substrat 10 de niobate de lithium. La fibre optique 30 via la ferrule est rendue solidaire du circuit intégré optique au moyen d'une colle 5 transparente à la longueur d'onde utilisée.

Le montage de la figure 2 permet avantageusement de combiner un filtre en polarisation au moyen du polariseur à guide d'onde 6 et un filtre monomode spatial au moyen de la fibre 30.

Le polariseur à guide d'onde 6 formé par échange protonique permet de séparer d'une part un état de polarisation, par exemple TE, guidé dans le guide d'onde 6 et d'autre part un état de polarisation, par exemple TM, non guidé qui se propage dans le substrat 10. Les polariseurs à guide d'onde intégré sur substrat de niobate de lithium présentent un taux de réjection en polarisation très élevé pour la polarisation non guidée et une perte d'insertion très limitée pour la polarisation guidée.

Toutefois, comme détaillé en lien avec la figure 1, le polariseur à guide d'onde 6 fonctionne par un effet de guidage sélectif en polarisation et non pas par absorption. De ce fait, une partie du faisceau non guidé qui se propage dans le substrat 10 peut être recouplée dans la fibre optique en sortie du COI après une ou plusieurs réflexions internes dans le substrat.

En pratique, dans un polariseur 6 à échange protonique tel qu'illustré sur la figure 2, les réflexions internes de lumière non guidée dans le substrat limitent le taux de réjection en polarisation à environ -45 dB en puissance. Des circuits intégrés comportant une rainure sur la face arrière du substrat permettent d'atténuer les réflexions internes parasites et d'obtenir un taux de réjection en polarisation au mieux de -65 dB.

Il en résulte qu'une composante résiduelle de polarisation TM qui se propage via le substrat 10 d'un polariseur 6 à échange protonique peut être transmise via la fibre optique 30 à un système optique de mesure, par exemple de rotation. Or, une fibre optique 30 dite monomode supporte en réalité deux modes de polarisation.

La qualité du polariseur influence les performances de certaines applications.

Cherchant à éviter la propagation du faisceau de polarisation TM dans le substrat d'un polariseur à guide d'onde, il a été proposé de placer un autre polariseur, (par exemple de type cube séparateur de polarisation, lame de cristal) par exemple en amont de la fibre d'entrée 20 et de relier cet autre polariseur au circuit optique intégré via une fibre à maintien de polarisation.

Une autre solution consiste à utiliser une fibre polarisante sur la voie fibre d'entrée 20. Toutefois, une fibre polarisante présente l'inconvénient d'être très sensible aux courbures : les pertes et le taux d'extinction de polarisation (PER pour polarization extinction ratio) sont modifiés en fonction du rayon de courbure et de l'axe d'une telle courbure.

OBJET DE L'INVENTION

La présente invention a pour but de remédier aux inconvénients des dispositifs polarisants de l'art antérieur et concerne plus particulièrement un dispositif optique polarisant à guide d'onde.

Selon l'invention, le dispositif optique polarisant comprend un premier polariseur, le premier polariseur étant un polariseur à guide d'onde sur circuit optique intégré, une section d'un deuxième guide d'onde optique, et un deuxième polariseur, le deuxième polariseur étant un polariseur à lame mince ayant une épaisseur physique T et un indice de réfraction n, le deuxième polariseur à lame mince étant intercalé sur le trajet optique entre d'une part une extrémité de guide d'onde du premier polariseur et d'autre part une extrémité du deuxième guide d'onde optique, la distance physique $d$ entre ladite extrémité de guide d'onde du premier polariseur et ladite extrémité du deuxième guide d'onde optique étant inférieure ou égale au double de la longueur de Rayleigh

$$d \leq 2x \frac{\pi w_0^2}{\lambda_m} \qquad \lambda_m = \frac{\lambda_0}{n}$$

soit : où représente la longueur d'onde d'un faisceau dans le deuxième polariseur et $2 w_0$ représente le diamètre d'un faisceau monomode à 1/e en amplitude dans le guide d'onde du premier polariseur et l'épaisseur physique $T$ du deuxième polariseur étant inférieure ou égale à la distance physique $d$.

Cette combinaison de deux polariseurs particuliers en série permet d'augmenter le taux de réjection en polarisation par comparaison avec un dispositif polarisant de l'art antérieur ne comportant qu'un seul polariseur à guide d'onde sur circuit optique intégré, sans générer d'effets d'interférences parasites. De plus, cette combinaison induit des pertes d'insertion extrêmement limitées et ne modifie pas l'encombrement du circuit optique intégré.

Le dispositif optique polarisant de l'invention présente un taux de réjection en polarisation très élevé.

Dans un mode de réalisation particulier et avantageux, le dispositif optique polarisant comprend en outre une section d'un troisième guide d'onde optique et un troisième polariseur, le troisième polariseur étant un polariseur à lame mince ayant une épaisseur physique U et un indice de réfraction n, le troisième polariseur à lame mince étant intercalé sur le trajet optique entre d'une part une autre extrémité de guide d'onde du premier polariseur et d'autre part une extrémité du troisième guide d'onde optique, la distance physique g entre ladite autre extrémité de guide d'onde du premier polariseur et ladite extrémité du troisième guide d'onde optique étant inférieure ou égale au double de la longueur de Rayleigh soit

$$g \leq 2x \frac{\pi w_0^2}{\lambda_m} \qquad , \qquad \lambda_m = \frac{\lambda_0}{n}$$

où représente la longueur d'onde d'un faisceau dans le troisième polariseur et où $2 w_0$ représente le diamètre d'un faisceau monomode à 1/e en amplitude dans le guide d'onde du premier polariseur et l'épaisseur physique $U$ du troisième polariseur étant inférieure ou égale à la distance physique $g$.

Selon des aspects particuliers et avantageux de modes de réalisation de l'invention :

- la distance physique $d$ entre ladite extrémité de guide d'onde du premier polariseur et ladite extrémité du deuxième guide d'onde optique est inférieure ou égale à $\frac{\pi w_0^2}{\lambda_m}$ ;

- la distance physique $g$ entre ladite autre extrémité de guide d'onde du premier polariseur et ladite extrémité du troisième guide d'onde optique est inférieure ou égale à $\frac{\pi w_0^2}{\lambda_m}$ ;

- la distance physique $d$ entre ladite extrémité de guide d'onde du premier polariseur et ladite extrémité du deuxième guide d'onde optique est inférieure ou égale à $\frac{\pi w_0^2}{2 \times \lambda_m}$ ;

- la distance physique $g$ entre ladite autre extrémité de guide d'onde du premier polariseur et ladite extrémité du troisième guide d'onde optique est inférieure ou égale à $\frac{\pi w_0^2}{2 \times \lambda_m}$ ;

- le deuxième polariseur à lame mince a une épaisseur physique $T$ inférieure ou égale à 50 microns et de préférence inférieure ou égale à 30 microns ;

- le troisième polariseur à lame mince a une épaisseur physique $U$ inférieure ou égale à 50 microns et de préférence inférieure ou égale à 30 microns ;

- le deuxième polariseur est formé d'une lame mince de verre polarisant ;

- le troisième polariseur est formé d'une lame mince de verre polarisant ;
- le premier polariseur à guide d'onde sur circuit optique intégré est formé par échange protonique sur un substrat de niobate de lithium.

Dans un mode de réalisation particulier et avantageux, le circuit optique intégré comprend le premier polariseur à guide d'onde, un séparateur à jonction Y et/ou un modulateur optique de phase.

Dans une alternative, le premier polariseur à guide d'onde est un polariseur à fibre optique.

Avantageusement, le taux de réjection en polarisation du au moins un polariseur à lame mince est meilleur que -20 dB et, de manière préférentielle, le taux de réjection en polarisation du polariseur à guide d'onde est meilleur que -40 dB.

Selon des aspects particuliers et avantageux :

- le premier polariseur et le deuxième polariseur sont des polariseurs linéaires ayant des axes de polarisation alignés l'un par rapport à l'autre ;
- le premier polariseur et le troisième polariseur sont des polariseurs linéaires ayant des axes de polarisation alignés l'un par rapport à l'autre ;
- le défaut d'alignement axial entre l'extrémité de guide d'onde du premier polariseur et l'extrémité du deuxième guide d'onde est inférieur à $w_0$ /2 et de préférence inférieur à $w_0$ /10 ;
- ladite section d'un deuxième guide d'onde optique est une section de fibre polarisante ;
- ladite section d'un troisième guide d'onde optique est une section de fibre polarisante ;
- le deuxième polariseur est collé à l'extrémité du guide d'onde du premier polariseur et à l'extrémité du deuxième guide d'onde optique ; et/ou
- le troisième polariseur est collé à l'extrémité du guide d'onde du premier polariseur et collé à l'extrémité du troisième guide d'onde optique.

La présente invention concerne également les caractéristiques qui ressortiront au cours de la description qui va suivre et qui devront être considérées isolément ou selon toutes leurs combinaisons techniquement possibles.

DESCRIPTION DÉTAILLÉE D'UN EXEMPLE DE RÉALISATION

Cette description donnée à titre d'exemple non limitatif fera mieux comprendre comment l'invention peut être réalisée en référence aux dessins annexés sur lesquels :

- la figure 1 représente schématiquement une vue en perspective d'un dispositif polarisant à guide d'onde sur circuit optique intégré selon l'art antérieur ;
- la figure 2 représente schématiquement une vue en coupe d'une extrémité de fibre optique reliée à un polariseur à guide d'onde selon l'art antérieur ;
- la figure 3 représente schématiquement une vue en coupe d'un dispositif optique polarisant selon un premier mode de réalisation de l'invention ;
- la figure 4 représente schématiquement une vue en coupe d'un détail d'un dispositif optique polarisant selon un mode de réalisation de l'invention ;
- la figure 5 illustre la divergence d'un faisceau gaussien en sortie d'une fibre optique monomode ;
- la figure 6 représente schématiquement une vue en coupe d'un dispositif optique polarisant selon un deuxième mode de réalisation de l'invention.

Dispositifs

La figure 3 propose un dispositif optique polarisant 50 comprenant un premier guide d'onde optique 20, un premier polariseur à guide d'onde 6, un deuxième polariseur 52 et un deuxième guide d'onde optique 30. Le dispositif polarisant 50 comporte ainsi un montage d'au moins deux polariseurs en série dans une configuration particulière qui permet d'atténuer la propagation de faisceaux parasites non guidés sans induire de pertes notables.

On choisit un premier polariseur 6 à guide d'onde. De préférence, le premier polariseur 6 est un polariseur à guide d'onde intégré sur le substrat 10 d'un circuit optique intégré. De façon préférée, le premier polariseur 6 est formé par échange protonique sur substrat de niobate de lithium. Dans une autre variante, le premier polariseur 6 est une fibre polarisante.

Un aspect de l'invention consiste à sélectionner un deuxième polariseur 52 fonctionnant en transmission et ayant une épaisseur ultramince. De préférence, le polariseur ultramince 52 a une épaisseur $T$ inférieure ou égale à 50 microns. Un autre aspect de l'invention consiste à placer le deuxième polariseur ultramince 52 entre l'extrémité 8 du premier polariseur à guide d'onde 6 et l'extrémité 32 d'un autre guide d'onde. Sur la figure 3, l'autre guide d'onde est constitué par le coeur 31 d'une fibre optique 30.

La fibre optique 30 a un diamètre de coeur égal à 2a. Le polariseur à guide d'onde 6 a une dimension transverse b. De préférence, les dimensions transverses de la fibre optique 30 et du polariseur à guide d'onde 6 sont identiques. Les axes longitudinaux de la fibre optique 30 et du polariseur à guide d'onde 6 sont alignés, de manière à éviter les pertes optiques. Dans un exemple de réalisation, le guide d'onde 6 est fabriqué par échange protonique sur substrat de niobate de lithium, et le guide d'onde a, par construction, une section elliptique, avec un ratio entre les deux axes de l'ellipse pratiquement égal à deux.

L'axe de polarisation TE du polariseur à lame ultramince 52 est aligné sur l'axe de polarisation TE du guide d'onde polarisant 6 avant collage.

De façon particulièrement avantageuse, le polariseur à lame ultramince 52 a une forme extérieure parallélépipédique, de 1mm de large sur 2 mm de long, avec une facette externe 520 parallèle à un axe de polarisation du polariseur ultramince 52. Or, le circuit intégré sur niobate de lithium présente une surface inférieure 4 et une surface supérieure 3 planes et parallèles à l'axe du polariseur à guide d'onde 6. Pour aligner l'axe du polariseur à lame ultramince 52 sur l'axe de polarisation du polariseur à guide d'onde 6, il suffit alors d'aligner mécaniquement la facette 520 du polariseur ultramince 52 sur la face plane 3 ou 4 du circuit optique intégré. Cet alignement mécanique permet de limiter à quelques dixièmes de degrés le défaut d'alignement entre les axes du polariseur ultramince 52 et du polariseur à guide d'onde 6. Un alignement plus fin en orientation peut ensuite être réalisé.

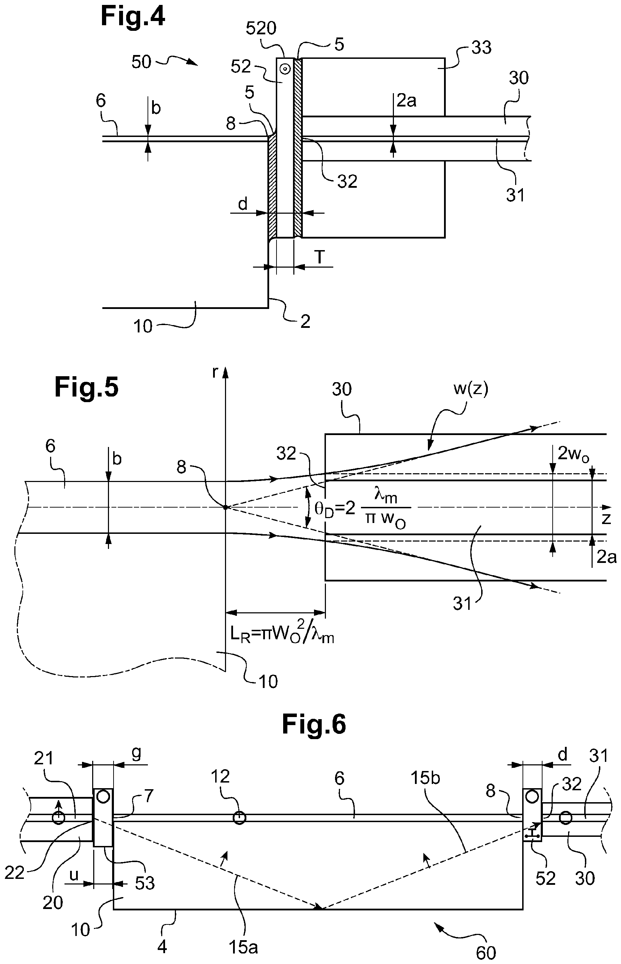

Le dispositif polarisant 50 de la figure 4 fonctionne de la manière suivante. Un faisceau non polarisé se propage dans le coeur 21 de la fibre optique 20 jusqu'à une extrémité 22. Le faisceau est couplé dans le circuit optique intégré. Une partie 12 du faisceau, polarisée TE est couplée via l'extrémité 7 du guide d'onde 6 et se propage de manière guidée jusqu'à l'autre extrémité 8 du guide d'onde 6. Une autre partie du faisceau incident, polarisée TM, se propage de manière non guidée dans le substrat 10. Par exemple, une partie du faisceau non guidé 14a se réfléchit sur la face inférieure 4 du substrat et forme un faisceau réfléchi 14b, également polarisé TM. D'une part, le polariseur ultramince 52 reçoit le faisceau polarisé TE 12 et transmet ce faisceau 12 avec une très faible atténuation (environ 0,5 dB) à l'extrémité 32 de la fibre optique 30. D'autre part, le polariseur ultramince 52 reçoit le faisceau polarisé TM 14b se propageant dans le COI ; le polariseur ultramince 52 atténue d'environ -20 dB à -30 dB, ce faisceau polarisé TM 14b. Le coeur 31 de la fibre optique 30 collecte donc essentiellement le faisceau polarisé TE 12.

Le dispositif polarisant 40 permet de polariser un faisceau incident 21 avec un taux d'extinction en polarisation nettement supérieur à celui du polariseur 6 à guide d'onde intégré seul. Le faisceau transmis subit une très faible atténuation lors de la transmission à travers le polariseur ultramince 52, bien que le polariseur ultramince ne soit pas guidant. La faible épaisseur du polariseur ultramince 52 permet d'éviter les pertes par divergence du faisceau polarisé TE.

Sur la figure 4, on note respectivement :

- *b* la dimension transverse du guide d'onde polarisant 6,
- *2a* le diamètre du coeur 31 de la fibre optique 30,
- *T* l'épaisseur du deuxième polariseur 52, et
- *d* la distance entre l'extrémité 8 du premier polariseur à guide d'onde 6 et l'extrémité 32 de l'autre guide d'onde 12.

Les dimensions 2a et b sont choisies de manière à ce que le couplage optique entre les deux guides d'onde soit possible, de préférence dans les deux directions de propagation. Les diamètres de mode des différents guides doivent donc être compatibles, ce qui est réalisable avec une grande tolérance.

Plus précisément, on dispose l'extrémité 32 de la fibre optique 30 à une distance physique *d* de l'extrémité 8 du premier polariseur à guide d'onde 6, la distance physique *d* étant inférieure ou égale au double de la longueur de la zone de Rayleigh définie par la relation suivante :

$$d \le 2x \frac{\pi w_0^2}{\lambda_m} \ ,$$

où $w_0$ représente le rayon d'un faisceau monomode dans les moyens de guidage optique et $\lambda_m$ représente la longueur d'onde du faisceau source

$$( \lambda_m = \frac{\lambda_0}{n} \ ),$$

100 dans le matériau du polariseur où n représente l'indice de réfraction du matériau du polariseur et $\lambda_0$ représente la longueur d'onde du faisceau source 100 dans le vide.

Le deuxième polariseur 52 est un polariseur à lame mince, ou polariseur ultramince, dont l'épaisseur

$$T \le d \le 2x \frac{\pi w_0^2}{\lambda_m} \ .$$

satisfait la condition :

De façon avantageuse, le polariseur ultramince 52 est en matériau inorganique. Un polariseur inorganique offre une résistance accrue aux faisceaux optiques intenses et confère au dispositif polarisant une durée de vie plus longue.

Un tel polariseur ultramince 52 est par exemple fabriqué par la société Corning sous la dénomination commerciale « Polarcor UltraThin Glass Polarizers ». Un tel polariseur ultramince 52 est constitué d'une lame de verre polarisante d'une épaisseur d'environ 30 microns ± 10 microns. Les dimensions d'un polariseur ultramince peuvent être définies en fonction des besoins de l'application, sauf l'épaisseur. Par exemple, on utilise un polariseur ultramince ayant une hauteur de 1mm et une longueur de 2 mm. Un polariseur à lame ultramince 52 présente généralement un taux de réjection en polarisation de -20 dB pouvant aller jusque -23 dB selon la spécification du fabricant. La bande spectrale de transmission du polariseur à lame ultramince 52 est située dans le proche infrarouge (autour de 1310 nm et de 1550 nm).

Un polariseur à lame mince a l'avantage de présenter une bande passante de plusieurs dizaines de nanomètres (par exemple 1275-1345 nm ou 1510-1590 nm). La bande passante du polariseur à lame mince est donc plus étendue que la bande spectrale de la source. Le polariseur à lame mince ne réduit pas la bande passante du dispositif polarisant. On observe que la bande passante du polariseur à lame mince est plus étendue que celle d'une fibre optique polarisante. En effet, la bande passante d'une fibre polarisante est en général de 40 à 60nm. De plus, la bande passante d'une fibre optique peut être encore réduite du fait de courbures dans la fibre. D'autre part, ces fibres éliminent la polarisation rapide et pas la polarisation lente. Or, un circuit optique intégré en niobate de lithium à échange protonique laisse passer la polarisation rapide. Des signaux parasites de la fibre polarisante peuvent alors interférer avec le signal utile du circuit optique intégré.

Dans une variante, l'autre guide d'onde 31 est un guide d'onde intégré sur un circuit optique intégré.

Dans le mode de réalisation illustré sur la figure 4, le polariseur ultramince 52 est collé directement en sortie d'un polariseur à guide d'onde 6, c'est-à-dire sur la face 2 du substrat 10. D'autre part, le polariseur à lame ultramince 52 est collé sur la férule 32 d'une fibre optique monomode 30. De façon avantageuse, la colle 5 utilisée pour coller le polariseur à lame ultramince 52 est transparente à la longueur d'onde de la source. De préférence, la colle 5 présente un indice de réfraction adapté à la fibre et/ou au circuit optique intégré. Avantageusement, la colle a une épaisseur négligeable (de moins de 1 microns à au plus quelques microns). A cet égard, la figure 3 n'est pas une représentation à l'échelle, l'épaisseur de colle étant très inférieure à l'épaisseur $T$ du polariseur ultramince 52.

L'arrangement des figures 3-4 permet de disposer en série un premier polariseur à guide d'onde 6, un deuxième polariseur ultramince 52 et l'extrémité de la fibre optique 30. De façon avantageuse, le deuxième polariseur ultramince 52 fonctionne par absorption si bien que la polarisation TM est fortement atténuée à l'entrée de la fibre optique 30. Le deuxième polariseur ultramince 52 induit une perte optique par insertion d'environ -0.5 dB sur le faisceau de polarisation TE, si bien que l'état de polarisation transmis est peu affecté par les pertes d'insertion liées au deuxième polariseur 52.

Le taux d'extinction des deux polariseurs 6, 52 en série est amélioré d'environ -25dB à - 35 dB. Avantageusement, le polariseur à guide d'onde 6 sur COI a un taux de réjection de -45 à -65 dB, ce qui permet d'obtenir un dispositif polarisant 50 ayant un taux de réjection en polarisation total d'environ -70 dB à -100 dB.

On remarque que le montage de la figure 3 fonctionne dans les deux directions de propagation des faisceaux optiques guidés. Le dispositif polarisant 50 de la figure 3 est donc parfaitement réciproque.

Avantageusement, le deuxième polariseur 52 s'étend sur la face du substrat 2 du circuit optique intégré qui est transverse au guide d'onde polarisant 6. De cette manière, le deuxième polariseur 52 permet d'atténuer la transmission de faisceaux parasites entre la fibre optique 30 et le substrat 10 du circuit optique intégré, et ceci dans les deux directions de propagation.

Le dispositif polarisant 50 est formé d'au moins un premier polariseur à guide d'onde 6, d'un deuxième polariseur à lame mince 52 et d'un autre guide d'onde 31. Un tel dispositif polarisant 50 s'insère facilement sur le trajet optique entre une source et un détecteur par exemple.

Grâce au dispositif polarisant 50, un faisceau optique provenant d'une source lumineuse est polarisé linéairement en série par exemple en transmission via le premier polariseur 6 puis le deuxième polariseur 52. Ce dispositif polarisant 50 permet d'augmenter le taux de réjection en polarisation sans augmenter l'encombrement du circuit optique intégré et sans induire de pertes supplémentaires sur le faisceau transmis.

A contrario, on observe que ces résultats ne s'appliquent pas à un polariseur plus courant à couches minces polarisantes sur substrat de verre, tel que par exemple un polariseur en verre Polarcor™ de la société Corning formé de deux couches minces polarisantes de 30 à 50 microns d'épaisseur déposées sur les deux faces opposées d'une lame de verre de 0.5 à 0.15 mm d'épaisseur. Un tel polariseur à couches minces présente pourtant un taux de réjection en polarisation très élevé d'au moins -40 dB ce qui le rend *a priori* plus intéressant dans l'application recherchée. En effet, on cherche à maximiser le taux de réjection en polarisation d'un dispositif polarisant, pour viser idéalement un taux de réjection en polarisation de -90dB à -100dB. Cependant, un polariseur à couches minces polarisantes sur substrat de verre entraîne des pertes trop importantes sur le faisceau transmis d'environ 5 dB à chaque passage à travers un polariseur à couches minces polarisantes.

Dans la cadre de la présente invention, le résultat obtenu avec un polariseur à lame ultramince 52 disposé en série avec le polariseur à guide d'onde 6 est analysé comme suit, en lien avec la figure 5.

Considérons un faisceau monomode Gaussien se propageant dans le guide d'onde 6 sur circuit optique intégré. La dimension transverse du guide d'onde est notée b. Le diamètre d'un faisceau monomode Gaussien se propageant dans le guide d'onde 6 est noté : $2w_0$.

A l'extrémité 8 du guide d'onde 6, la propagation du faisceau Gaussien en espace libre s'effectue le long de la direction longitudinale Z suivant deux régimes distincts. Dans une première partie, dite en champ proche, entre l'extrémité du guide d'onde 6 et une distance appelée longueur de Rayleigh, le faisceau se propage avec une divergence quasiment nulle. La longueur de Rayleigh $L_R$ est définie comme suit :

Soit N tel que $2w_o = N\lambda_m$

$$L_R = \frac{\pi w_0^2}{\lambda_m}$$

D'où l'approximation :

$$L_R \approx \frac{(2w_0)^2}{\lambda_m} = N^2 \lambda_m$$

Dans une seconde partie, dite en champ lointain, au-delà de la longueur de Rayleigh, le faisceau se propage avec une divergence ayant une ouverture angulaire égale à θ, définie comme suit :

$$\theta = 2\frac{\lambda}{\pi w_0}$$

$$\theta \approx \frac{\lambda}{2w_0} \approx \frac{1}{N}$$

D'où l'approximation : où N représente le nombre de longueur d'onde contenu dans $2w_0$ de la fibre optique 20.

Pour une dimension transverse b du guide d'onde égale à 6 microns, une longueur d'onde dans le vide égale à $\lambda_0 = 1,55 \ \mu m$, le diamètre du faisceau monomode est $2w_0$ égal à environ 8 $\mu m$ et la longueur de Rayleigh est égale à environ 48 microns dans un milieu d'indice n=1,5. Dans une zone, dite zone de Rayleigh, s'étendant sur une longueur $L_R$ à partir de l'extrémité 8 du guide d'onde 6et de diamètre $2w_0$, la divergence du faisceau est quasiment nulle, le diamètre du faisceau reste donc égal à 2 $w_0 \approx 8$ microns.

A une distance suivant l'axe Z de 50 microns, le faisceau diverge et présente un diamètre 2w(z=50 $\mu$m) d'environ 11,8 microns, et à une distance longitudinale Z de 150 microns, le diamètre du faisceau 2w(z=150$\mu$m) est d'environ 26 microns. A une distance de 65 $\mu$m, égale à deux fois la longueur de Rayleigh, le diamètre du faisceau 2w(z=65 $\mu$m) est d'environ 13,4 microns. En pratique, si les deux guides d'onde 6 et 21 ont la même taille, la perte est de -3 dB à une distance de deux fois la longueur de Rayleigh.

Dans un exemple de réalisation, la fibre optique présente un diamètre de mode $2w_0$ entre 6 et 8$\mu$m environ. Le guide d'onde polarisant 6 présente un mode plutôt elliptique (et non pas circulaire) ayant un grand axe d'environ 8 microns de diamètre et un petit axe d'environ 4 microns de diamètre.

On choisit un polariseur à lame ultramince 52 d'épaisseur physique *T* inférieure à la longueur de Rayleigh disposé entre l'extrémité de la fibre optique et l'extrémité du polariseur à guide d'onde 6. Ainsi, le faisceau monomode Gaussien sortant du guide d'onde reste très peu divergent entre l'extrémité du polariseur à guide d'onde intégré 6 et l'entrée dans la fibre optique 30.

Cette disposition permet de réduire considérablement les couplages parasites en dehors du guide d'onde polarisant et de réduire la propagation des faisceaux parasites dans le substrat du polariseur à guide d'onde intégré. De plus, les pertes induites sur le faisceau polarisé et guidé sont réduites, en pratique à moins de 1dB. Dans la direction de propagation, le coeur 31 de la fibre ne collecte quasiment pas de faisceaux lumineux se propageant dans le substrat du polariseur à guide d'onde 6. Ce dispositif polarisant fonctionne également de manière réciproque dans la direction inverse de propagation des faisceaux.

Cette combinaison permet d'additionner efficacement le taux de réjection en polarisation du premier polariseur 6 et du deuxième polariseur 52, sans générer de faisceau d'interférences parasites.

L'axe longitudinal en extrémité de la section de guide d'onde 31 est de préférence aligné sur l'axe longitudinal du polariseur à guide d'onde 6. Avantageusement, le défaut d'alignement transverse entre la première extrémité 8 de guide d'onde du premier polariseur 6 et la seconde extrémité 32 de guide d'onde de ladite section de guide d'onde optique 31 est inférieur à $w_0/2$, et de préférence, inférieur à $w_0/10$.

L'alignement axial du polariseur à lame mince n'est pas critique, lorsqu'il est disposé côté source.

Le polariseur à lame ultramince 52 étant de préférence constitué de verre présente en outre l'avantage d'être plus résistant à un faisceau laser qu'un polariseur organique.

Au contraire, avec un polariseur à couches minces, dont l'épaisseur est comprise entre 0.15 mm et 0.5 mm c'est-à-dire entre 150 microns et 500 microns, le premier polariseur à guide d'onde 6 ne peut pas être disposé dans la zone de Rayleigh de la fibre optique. Dans ce cas, le faisceau polarisé par le polariseur à couches minces diverge : une partie de ce faisceau est transmise dans le polariseur à guide d'onde et une autre partie de ce faisceau, de puissance non négligeable, peut être transmise via le substrat du polariseur à guide d'onde, ce qui induit des pertes non négligeables, et éventuellement l'apparition d'un spectre cannelé. L'utilisation d'un polariseur à couches minces d'épaisseur supérieure à la longueur de Rayleigh produit ainsi des pertes trop importantes.

Un polariseur à lame mince, c'est-à-dire d'épaisseur inférieure à la longueur de Rayleigh, présente un taux de réjection en polarisation limité en pratique à environ -20 dB à -35 dB, c'est-à-dire inférieur de plusieurs ordres de grandeur au taux de réjection en polarisation, d'environ -40 dB, d'un polariseur à couches minces, ayant une épaisseur de 150 à 500 $\mu$m. Néanmoins, la juxtaposition d'un polariseur à lame mince et d'un polariseur à guide d'onde formé par échange protonique sur substrat de niobate de lithium permet d'atteindre un taux de réjection en polarisation mesuré de 80 à 110 dB avec très peu de pertes.

La tolérance en positionnement du polariseur à lame mince est donc bien plus faible dans la direction longitudinale suivant l'axe Z, que dans une direction transverse. En transverse, les dimensions du polariseur à lame mince sont bien plus grandes que la taille des modes.

Le dispositif polarisant de l'invention sélectionne paradoxalement un deuxième polariseur qui présente un taux de réjection en polarisation certes modéré, mais qui présente une épaisseur inférieure à la longueur de Rayleigh, pour permettre de disposer en série le premier polariseur et le deuxième polariseur dans cette zone de Rayleigh en sortie de la fibre optique 20.

Dans une variante, la fibre optique 30 peut être remplacée par un premier guide d'onde sur un circuit optique intégré, ayant des dimensions transverses analogues à celles du deuxième polariseur à guide d'onde. Dans ce cas, le deuxième polariseur ultramince 52 est disposé entre le premier polariseur à guide d'onde et le premier guide d'onde sur circuit optique intégré , de manière à ce que le premier et le deuxième polariseur soient dans la zone de Rayleigh du premier guide d'onde sur un circuit optique intégré.

Dans un mode de réalisation particulier, la fibre optique 30 est une fibre polarisante ou à maintien de polarisation. Dans une autre variante, la fibre optique 30 est remplacée par un guide d'onde polarisant.

Le premier polariseur 6 est un polariseur à guide d'onde sur circuit optique intégré, de préférence formé sur un substrat de niobate de lithium.

De façon avantageuse, le premier polariseur à guide d'onde 6 est intégré sur la branche commune d'un séparateur à jonction Y et le polariseur à lame ultramince 52 est placé sur l'entrée-sortie commune du circuit intégré optique. Le deuxième polariseur 52 est collé à l'extrémité d'une fibre optique 12 qui relie l'entrée sortie de l'interféromètre au séparateur de source 6. Le deuxième polariseur 52 à lame mince est disposé entre l'extrémité 32 de la fibre optique 30 et l'extrémité 8 du premier polariseur à guide d'onde 6.

Dans le premier mode de réalisation, le polariseur à lame mince 52 est aligné sur le polariseur à guide d'onde 6. Dans ce cas, l'alignement des axes de polarisation est peu critique, car on estime qu'un défaut d'alignement de 5 degrés est susceptible d'induire une perte limitée de 1% sur le signal détecté.

Pour un polariseur à lame mince ayant 20dB de taux de réjection, le taux d'extinction du dispositif polarimétrique est maximum lorsque les deux axes des polariseurs sont alignés.

De manière alternative et/ou complémentaire, un autre polariseur à lame ultramince, peut être disposé sur le chemin optique dans la zone de Rayleigh en entrée du circuit optique intégré 6, l'épaisseur de cet autre polariseur ultramince étant aussi inférieure à la longueur de Rayleigh.

Ainsi, un faisceau est polarisé successivement par un polariseur à lame mince 53, le polariseur à guide d'onde 6 puis par un autre polariseur à lame mince 52.

De façon avantageuse, dans un deuxième mode de réalisation illustré sur la figure 6, le dispositif optique polarisant comporte un premier polariseur à guide d'onde intégré 6, un polariseur à lame mince 53 et un polariseur à lame mince 52 placés respectivement à chaque extrémité 7, respectivement 8 de guide d'onde du circuit intégré optique. Un polariseur à lame mince 53 est collé à l'extrémité d'une section de fibre optique 20. Un autre polariseur à lame mince 52 est collé à l'extrémité d'une section de fibre optique 30.

Supposons qu'un faisceau optique non polarisé se propage dans le coeur 21 de la fibre optique 20. Le polariseur à lame mince 53 transmet une composante de polarisation TE en direction de l'extrémité 7 du guide d'onde 6. L'atténuation induite par le polariseur à lame mince 53 sur le faisceau 12 transmis est seulement d'environ 0,5 dB. D'autre part, le polariseur à lame mince 53 atténue la composante de polarisation TM d'environ -25 dB à -35 dB. Une composante résiduelle TM 15a est susceptible de se propager de manière non guidée dans le substrat. A l'autre extrémité 8 du guide d'onde 6 est placé un autre polariseur à lame mince 52.

Le guide d'onde 6 polarisant transmet un faisceau polarisé TE au polariseur à lame mince 52. Toutefois, le polariseur à lame mince 52 reçoit aussi une composante résiduelle 15b de polarisation TM, qui s'est propagée par réflexion interne sur la face inférieure 4 du substrat.

Le polariseur à lame mince 52 atténue à son tour la composante résiduelle 15b de polarisation TM d'environ -25 dB à -35 dB. Dans le même temps, le polariseur à lame mince 52 induit une très faible atténuation, d'environ 0,5 dB, sur le faisceau 12 polarisé TE.

Ainsi le coeur 31 de la fibre optique 30 collecte un faisceau de polarisation TE, avec un excellent taux de réjection en polarisation et de faibles pertes sur le signal transmis.

En effet, le dispositif 60 de la figure 6 permet de cumuler les taux d'extinction du polariseur à lame mince 53, du polariseur à guide d'onde 6 et du polariseur à lame mince 52. Cette configuration permet d'obtenir un dispositif polarisant très compact et ayant un taux d'extinction en polarisation approchant les -100 dB. De plus, le dispositif polarisant 60 a un fonctionnement parfaitement réciproque.

Dans le cas où le COI comporte plusieurs guides d'onde 6 disposés de manière adjacente, les voies de sortie du COI sont séparées de moins d'une distance inférieure à la dimension transverse d'un polariseur à lame mince, il est possible d'utiliser un seul et même polariseur à lame ultramince en sortie du COI pour couvrir les extrémités de plusieurs guides d'onde sur un même circuit optique intégré. Dans un exemple de réalisation, la dimension transverse d'un polariseur à lame mince est de 2 mm, ce qui permet de couvrir des extrémités de guide d'onde distantes de moins de 2mm. A noter qu'il existe des polariseurs à lame mince de dimension bien supérieure à 2 mm.

Dans un mode de réalisation préféré, la fibre optique 20 et/ou 30 est une fibre optique monomode standard. Dans un autre mode de réalisation, la fibre optique 20 et/ou 30 est une fibre optique à maintien de polarisation, dont les axes sont de préférence alignés sur les axes du polariseur à guide d'onde 6 et/ou respectivement du au moins un polariseur à lame mince 52, 53.

## Revendications

1. Dispositif optique polarisant (50, 60) à guide d'onde **caractérisé en ce que** le dispositif optique polarisant (50, 60) à guide d'onde comprend :

- un premier polariseur (6), le premier polariseur (6) étant un polariseur à guide d'onde sur circuit optique intégré, et
- une section d'un deuxième guide d'onde optique (31),
- un deuxième polariseur (52), le deuxième polariseur (52) étant un polariseur à lame mince ayant une épaisseur physique $T$ et un indice de réfraction $n$, et
- le deuxième polariseur (52) à lame mince étant intercalé sur le trajet optique entre d'une part une extrémité (8) de guide d'onde du premier polariseur (6) et d'autre part une extrémité (32) du deuxième guide d'onde optique (31), la distance physique $d$ entre ladite extrémité (8) de guide d'onde du premier polariseur (6) et ladite extrémité (32) du deuxième guide d'onde optique (31) étant inférieure ou égale au double de

$$d \leq 2x \frac{\pi w_0^2}{\lambda_m} \; ,$$

la longueur de Rayleigh soit où

$$\lambda_m = \frac{\lambda_0}{n}$$

représente la longueur d'onde d'un faisceau dans le deuxième polariseur (52) et où $2w_0$ représente le diamètre d'un faisceau monomode à 1/e en amplitude dans le guide d'onde du premier polariseur (6) et
- l'épaisseur physique $T$ du deuxième polariseur (52) étant inférieure ou égale à la distance physique $d$.

**2.** Dispositif optique polarisant (50, 60) à guide d'onde selon la revendication 1 comprenant en outre :

- une section d'un troisième guide d'onde optique (21) et
- un troisième polariseur (53), le troisième polariseur (53) étant un polariseur à lame mince ayant une épaisseur physique $U$ et un indice de réfraction $n$,
- le troisième polariseur (53) à lame mince étant intercalé sur le trajet optique entre d'une part une autre extrémité (7) de guide d'onde du premier polariseur (6) et d'autre part une extrémité (22) du troisième guide d'onde optique (21),
- la distance physique $g$ entre ladite autre extrémité de guide d'onde (7) du premier polariseur (6) et ladite extrémité (22) du troisième guide d'onde optique (21) étant inférieure ou égale au double de la longueur de Rayleigh soit

$$g \leq 2x \frac{\pi w_0^2}{\lambda_m} \; , \qquad \lambda_m = \frac{\lambda_0}{n}$$

où représente la longueur d'onde d'un faisceau dans le troisième polariseur (53) et où $2w_0$ représente le diamètre d'un faisceau monomode à 1/e en amplitude dans le guide d'onde du premier polariseur (6) et
- l'épaisseur physique $U$ du troisième polariseur (53) étant inférieure ou égale à la distance physique $g$.

**3.** Dispositif optique polarisant (50, 60) à guide d'onde la revendication 1 ou la revendication 2 dans lequel la distance physique $d$ entre ladite extrémité (8) de guide d'onde du premier polariseur (6) et ladite extrémité (32) du deuxième guide d'onde optique (31) est inférieure ou égale à $\dfrac{\pi w_0^2}{\lambda_m}$ et/ou dans lequel la distance physique $g$ entre ladite autre extrémité de guide d'onde (7) du premier polariseur (6) et ladite extrémité (22) du troisième guide d'onde optique (21) est inférieure ou égale à $\dfrac{\pi w_0^2}{\lambda_m}$ .

**4.** Dispositif optique polarisant (50, 60) à guide d'onde selon l'une des revendications 1 à 3 dans lequel la distance physique $d$ entre ladite extrémité (8) de guide d'onde du premier polariseur (6) et ladite extrémité (32) du deuxième guide d'onde optique (31) est inférieure ou égale à $\dfrac{\pi w_0^2}{2 \times \lambda_m}$ et/ou dans lequel la distance physique $g$ entre ladite autre extrémité de guide d'onde (7) du premier polariseur (6) et ladite extrémité (22) du troisième guide d'onde optique (21) est inférieure ou égale à $\dfrac{\pi w_0^2}{2 \times \lambda_m}$ .

**5.** Dispositif optique polarisant (50, 60) à guide d'onde selon l'une des revendications 1 à 4, dans lequel le deuxième polariseur (52) à lame mince a une épaisseur physique $T$ inférieure ou égale à 50 microns et de préférence inférieure ou égale à 30 microns et/ou dans lequel le troisième polariseur (53) à lame mince a une épaisseur physique $U$ inférieure ou égale à 50 microns et de préférence inférieure ou égale à 30 microns.

**6.** Dispositif optique polarisant (50, 60) à guide d'onde selon l'une des revendications 1 à 5 dans lequel le deuxième polariseur (52) est formé d'une lame mince de verre polarisant et/ou dans lequel le troisième polariseur (53) à lame mince est formé d'une lame mince de verre polarisant.

7. Dispositif optique polarisant (50, 60) à guide d'onde selon l'une des revendications 1 à 6 dans lequel le premier polariseur à guide d'onde (6) sur circuit optique intégré est formé par échange protonique sur un substrat (10) de niobate de lithium.

8. Dispositif optique polarisant (50, 60) à guide d'onde selon l'une des revendications 1 à 7 dans lequel le premier polariseur (6) et le deuxième polariseur (52) sont des polariseurs linéaires ayant des axes de polarisation alignés l'un par rapport à l'autre et/ou dans lequel le premier polariseur (6) et le troisième polariseur (53) sont des polariseurs linéaires ayant des axes de polarisation alignés l'un par rapport à l'autre.

9. Dispositif optique polarisant (50, 60) à guide d'onde selon l'une des revendications 1 à 8 dans lequel ladite section d'un deuxième guide d'onde optique (31) est une section de fibre polarisante et/ou dans lequel ladite section d'un troisième guide d'onde optique (21) est une section de fibre polarisante.

10. Dispositif optique polarisant (50, 60) à guide d'onde selon l'une des revendications 1 à 9 dans lequel le deuxième polariseur (52) est collé à l'extrémité (8) de guide d'onde du premier polariseur (6) et à l'extrémité (32) du deuxième guide d'onde optique (31).

11. Dispositif optique polarisant (50, 60) à guide d'onde selon la revendication 2 ou selon la revendication 2 et l'une des revendications 3 à 10 dans lequel le troisième polariseur (53) est collé à l'extrémité (7) de guide d'onde du premier polariseur (6) et collé à l'extrémité (22) du troisième guide d'onde optique (21).

**Patentansprüche**

1. Polarisierendes optisches Element (50, 60) mit Wellenleiter, **dadurch gekennzeichnet, daß** das polarisierende optische Element (50, 60) mit Wellenleiter

   - einen ersten Polarisator (6), wobei der erste Polarisator (6) ein Polarisator mit einem Wellenleiter auf einem integrierten optischen Schaltkreis ist, und
   - einen Abschnitt eines zweiten optischen Wellenleiters (31),
   - einen zweiten Polarisator (52), wobei der zweite Polarisator (52) ein Polarisator mit einer dünnen Platte, die eine physische Dicke $T$ und einen Brechungsindex $n$ hat, und
   - wobei der zweite Polarisator (52) mit dünner Platte auf dem optischen Weg zwischen einem Wellenleiterende (8) des ersten Polarisators (6) einerseits und einem Ende (32) des zweiten optischen Wellenleiters (31) andererseits eingefügt ist, wobei der physische Abstand $d$ zwischen dem Wellenleiterende (8) des ersten Polarisators (6) und dem Ende (32) des zweiten optischen Wellenleiters (31) kleiner als oder gleich dem Doppelten der Rayleighlänge ist, al-

$$d \leq 2\,x\,\frac{\pi w_0^2}{\lambda_m} \quad , \quad \lambda_m = \frac{\lambda_0}{n}$$

so wobei die Wellenlänge eines Strahlenbündels im zweiten Polarisator (52) ist und wobei $2w_0$ der Durchmesser eines Monomode-Strahlenbündels bei einer Amplitude 1/e im Wellenleiter des ersten Polarisators (6) ist und
- wobei die physische Dicke $T$ des zweiten Polarisators (52) kleiner als oder gleich dem physischen Abstand $d$ ist,
aufweist.

2. Polarisierendes optisches Element (50, 60) mit Wellenleiter gemäß Anspruch 1, das außerdem

   - einen Abschnitt eines dritten optischen Wellenleiters (21) und
   - einen dritten Polarisator (53), wobei der dritte Polarisator (53) ein Polarisator mit einer dünnen Platte, die eine physische Dicke $U$ und einen Brechungsindex $n$ hat, und
   - wobei der dritte Polarisator (53) mit dünner Platte auf dem optischen Weg zwischen einem anderen Wellenleiterende (7) des ersten Polarisators (6) einerseits und einem Ende (22) des dritten optischen Wellenleiters (21) andererseits eingefügt ist,
   - wobei der physische Abstand $g$ zwischen dem anderen Wellenleiterende (7) des ersten Polarisators (6) und dem Ende (22) des dritten optischen Wellenleiters (21) kleiner als oder gleich dem Doppelten der Rayleighlänge ist, also

$$g \leq 2\,x\,\frac{\pi w_0^2}{\lambda_m} \quad , \quad \lambda_m = \frac{\lambda_0}{n}$$

wobei die Wellenlänge eines Strahlenbündels im dritten Polarisator (53) ist und wobei $2w_0$ der Durchmesser eines Monomode-Strahlenbündels bei einer Amplitude 1/e im Wellenleiter des ersten Polarisators (6) ist und
- wobei die physische Dicke $U$ des fritten Polarisators (53) kleiner als oder gleich dem physischen Abstand $g$ ist,
aufweist.

3. Polarisierendes optisches Element (50, 60) mit Wellenleiter gemäß Anspruch 1 oder Anspruch 2, bei dem der physische Abstand $d$ zwischen dem Wellenleiterende (8) des ersten Polarisators (6) und dem Ende (32) des zweiten optischen Wellenleiters (31) kleiner als oder gleich $\pi w_0^2 / \lambda_m$ ist und/oder bei dem der physische Abstand $g$ zwischen dem anderen Wellenleiterende (7) des ersten Polarisators (6) und dem Ende (22) des dritten optischen Wellenleiters (21) kleiner als oder gleich $\pi w_0^2 / \lambda_m$ ist.

4. Polarisierendes optisches Element (50, 60) mit Wellenleiter gemäß einem der Ansprüche 1 bis 3, bei dem der physische Abstand $d$ zwischen dem Wellenleiterende (8) des ersten Polarisators (6) und dem Ende (32) des zweiten optischen Wellenleiters (31) kleiner als oder gleich $\pi w_0^2 / 2\lambda_m$ ist und/oder bei dem der physische Abstand $g$ zwischen dem anderen Wellenleiterende (7) des ersten Polarisators (6) und dem Ende (22) des dritten optischen Wellenleiters (21) kleiner als oder gleich $\pi w_0^2 / 2\lambda_m$ ist.

5. Polarisierendes optisches Element (50, 60) mit Wellenleiter gemäß einem der Ansprüche 1 bis 4, bei dem der zweite Polarisator (52) mit dünner Platte eine physische Dicke $T$ von kleiner als oder gleich 50 $\mu$m und vorzugsweise von kleiner als oder gleich 30 $\mu$m aufweist und/oder bei dem der dritte Polarisator (53) mit dünner Platte eine physische Dicke $U$ von kleiner als oder gleich 50 $\mu$m und vorzugsweise von kleiner als oder gleich 30 $\mu$m aufweist.

6. Polarisierendes optisches Element (50, 60) mit Wellenleiter gemäß einem der Ansprüche 1 bis 5, bei dem der zweite Polarisator (52) aus einer dünnen Platte aus polarisierendem Glas gebildet ist und/oder bei dem der dritte Polarisator (53) aus einer dünnen Platte aus polarisierendem Glas gebildet ist.

7. Polarisierendes optisches Element (50, 60) mit Wellenleiter gemäß einem der Ansprüche 1 bis 6, bei dem der erste Polarisator (6) mit Wellenleiter auf einem integrierten optischen Schaltkreis durch einen Protonenaustausch auf einem Substrat (10) aus Lithiumniobat gebildet ist.

8. Polarisierendes optisches Element (50, 60) mit Wellenleiter gemäß einem der Ansprüche 1 bis 7, bei dem der erste Polarisator (6) und der zweite Polarisator (52) lineare Polarisatoren sind, die aufeinander ausgerichtete Polarisationsachsen haben, und/oder bei dem der erste Polarisator (6) und der dritte Polarisator (53) lineare Polarisatoren sind, die aufeinander ausgerichtete Polarisationsachsen haben.

9. Polarisierendes optisches Element (50, 60) mit Wellenleiter gemäß einem der Ansprüche 1 bis 8, bei dem der Abschnitt eines zweiten optischen Wellenleiters (31) ein Abschnitt einer polarisierenden Faser ist und/oder bei dem der Abschnitt eines dritten optischen Wellenleiters (21) ein Abschnitt einer polarisierenden Faser ist.

10. Polarisierendes optisches Element (50, 60) mit Wellenleiter gemäß einem der Ansprüche 1 bis 9, bei dem der zweite Polarisator (52) am Wellenleiterende (8) des ersten Polarisators (6) und am Ende (32) des zweiten optischen Wellenleiters (31) angeklebt ist.

11. Polarisierendes optisches Element (50, 60) mit Wellenleiter gemäß Anspruch 2 oder gemäß Anspruch 2 und einem der Ansprüche 3 bis 10, bei dem der dritte Polarisator (53) am Wellenleiterende (7) des ersten Polarisators (6) und am Ende (22) des dritten optischen Wellenleiters (21) angeklebt ist.

**Claims**

1. A waveguide polarizing optical device (50, 60) **characterized in that** the waveguide polarizing optical device (50, 60) comprises:

   - a first polarizer (6), the first polarizer (6) being a waveguide polarizer on an integrated optical circuit, and
   - a section of a second optical waveguide (31),
   - a second polarizer (52), the second polarizer (52) being a thin-plate polarizer having a physical thickness $T$ and a refractive index $n$, and
   - the second thin-plate polarizer (52) being interposed on the optical path between, on the one hand, a waveguide end (8) of the first polarizer (6), and on the other hand, an end (32) of the second optical waveguide (31), the physical distance $d$ between said waveguide end (8) of the first polarizer (6) and said end (32) of the second optical waveguide (31) being lower than or equal to twice the Rayleigh length, i.e.

$$d \leq 2x\frac{\pi w_0^2}{\lambda_m}, \qquad \lambda_m = \frac{\lambda_0}{n}$$

   where represents the wavelength of a beam in the second polarizer (52) and $2 w_0$ represents the diameter of a single-mode beam at 1/e in amplitude in the waveguide of the first polarizer (6), and
   - the physical thickness $T$ of the second polarizer (52) being lower than or equal to the physical distance $d$.

2. The waveguide polarizing optical device (50, 60) according to claim 1, further comprising:

   - a section of a third optical waveguide (21), and
   - a third polarizer (53), the third polarizer (53) being a thin-plate polarizer having a physical thickness $U$ and a refractive index $n$,
   - the third thin-plate polarizer (53) being interposed on the optical path between, on the one hand, another waveguide end (7) of the first polarizer (6), and on the other hand, an end (22) of the third optical waveguide (21),
- the physical distance $g$ between said other waveguide end (7) of the first polarizer (6) and said end (22) of the third optical waveguide (21) being lower than or equal to twice the Rayleigh length, i.e. $g \leq 2x\dfrac{\pi w_0^2}{\lambda_m}$, $\lambda_m = \dfrac{\lambda_0}{n}$ where represents the wavelength of a beam in the third polarizer (53) and $2\,w_0$ represents the diameter of a single-mode beam at $1/e$ in amplitude in the waveguide of the first polarizer (6), and
- the physical thickness $U$ of the third polarizer (53) being lower than or equal to the physical distance $g$.

3. The waveguide polarizing optical device (50, 60) according to claim 1 or claim 2, wherein the physical distance $d$ between said waveguide end (8) of the first polarizer (6) and said end (32) of the second optical waveguide (31) is lower than or equal to $\dfrac{\pi w_0^2}{\lambda_m}$ and/or wherein the physical distance $g$ between said other waveguide end (7) of the first polarizer (6) and said end (22) of the third optical waveguide (21) is lower than or equal to $\dfrac{\pi w_0^2}{\lambda_m}$.

4. The waveguide polarizing optical device (50, 60) according to one of claims 1 to 3, wherein the physical distance $d$ between said waveguide end (8) of a first polarizer (6) and said end (32) of the second optical waveguide (31) is lower than or equal to $\dfrac{\pi w_0^2}{2 \times \lambda_m}$ and/or wherein the physical distance $g$ between said other waveguide end (7) of the first polarizer (6) and said end (22) of the third optical waveguide (21) is lower than or equal to $\dfrac{\pi w_0^2}{2 \times \lambda_m}$.

5. The waveguide polarizing optical device (50, 60) according to one of claims 1 to 4, wherein the second thin-plate polarizer (52) has a physical thickness $T$ lower than or equal to 50 microns and preferably lower than or equal to 30 microns and/or wherein the third thin-plate polarizer (53) has a physical thickness $U$ lower than or equal to 50 microns and preferably lower than or equal to 30 microns.

6. The waveguide polarizing optical device (50, 60) according to one of claims 1 to 5, wherein the second polarizer (52) is formed of a polarizing glass thin plate and/or wherein the third thin-plate polarizer (53) is formed of a polarizing glass thin plate.

7. The waveguide polarizing optical device (50, 60) according to one of claims 1 to 6, wherein the first waveguide polarizer (6) on an integrated optical circuit is formed by proton exchange on a lithium niobate substrate (10).

8. The waveguide polarizing optical device (50, 60) according to one of claims 1 to 7, wherein the first polarizer (6) and the second polarizer (52) are linear polarizers having axes of polarization aligned relative to each other and/or wherein the first polarizer (6) and the third polarizer (53) are linear polarizers having axes of polarization aligned relative to each other.

9. The waveguide polarizing optical device (50, 60) according to one of claims 1 to 8, wherein said section of a second optical waveguide (31) is a section of polarizing fiber and/or wherein said section of a third optical waveguide (21) is a section of polarizing fiber.

10. The waveguide polarizing optical device (50, 60) according to one of claims 1 to 9, wherein the second polarizer (52) is bonded to the waveguide end (8) of the first polarizer (6) and to the end (32) of the second optical waveguide (31).

11. The waveguide polarizing optical device (50, 60) according to claim 2 or according to claim 2 and one of claims 3 to 10, wherein the third polarizer (53) is bonded to the waveguide end (7) of the first polarizer (6) and bonded to the end (22) of the third optical waveguide (21).

# Fig.1 Art antérieur

20
7
6
3
12
10
2
30

40

1

14

4

8

16

# Fig.2 Art antérieur

6

8
32
30

10

5

33

31

# Fig.3

21
12
6
14b
32
31

7
8

20
50

22

10

4

14a

52
30

# Fig.4

# Fig.5

$$\theta_D = 2\,\frac{\lambda_m}{\pi\,w_O}$$

$$L_R = \pi W_O^2/\lambda_m$$

# Fig.6